# EUROPEAN PATENT SPECIFICATION

(11) **EP 2 646 618 B1**
(45) Date of publication and mention of the grant of the patent: **05.10.2016**
(21) Application number: 11844285.4
(22) Date of filing: 25.11.2011
(51) Int. Cl.: D21F 5/18, B65H 23/02, B65H 26/00, D21F 7/04, F26B 13/10, G01B 11/14, G01N 21/17, G01N 21/55

(54) **A METHOD AND AN APPARATUS FOR DRYING PULP WEBS WITH MEANS FOR DETECTING REFLECTED RADIATION FOR ANALYSING THE POSITION OF THE WEB OR THE OCCURENCE OF ANY RESIDUE OF THE WEB**
VERFAHREN UND VORRICHTUNG ZUR TROCKNUNG VON ZELLSTOFFBAHNEN MIT MITTELN ZUR ERKENNUNG VON REFLEKTIERTER STRAHLUNG ZUR ANALYSE DER POSITION EINER BAHN ODER DES AUFTRETENS VON RÜCKSTÄNDEN DER BAHN
PROCÉDÉ ET APPAREIL POUR SÉCHER DES FILMS DE PÂTE AVEC DES MOYENS POUR DÉTECTER UN RAYONNEMENT RÉFLÉCHI POUR L'ANALYSE DE LA POSITION DU FILM OU DE L'APPARITION D'UN QUELCONQUE RÉSIDU DU FILM

(30) Priority: 29.11.2010 SE 1051245
(43) Date of publication of application: 09.10.2013
(73) Proprietor: Andritz Technology and Asset Management GmbH, 8045 Graz (AT)
(72) Inventor: KAMPRIS, Roland, S-123 50 Farsta (SE); OLSSON, Christer, S-352 50 Växjö (SE); JÖNSSON, Frank, S-370 33 Tving (SE); KARLSSON, Arne, S-352 55 Växjö (SE)
(74) Representative: Awapatent AB
(86) International application number: PCT/SE2011/051425
(87) International publication number: WO 2012/074462

(56) References cited:
- EP-A2- 0 606 829
- WO-A1-03/004764
- US-A- 3 910 701
- US-A- 4 021 031
- US-A- 4 049 213
- US-A- 4 146 797
- US-A- 4 154 004
- US-A- 5 467 194
- US-A- 5 489 784
- US-A1- 2007 272 883
- US-A1- 2010 078 140
- US-B1- 6 526 369

## Description

### Field of the Invention

The present invention relates to a gas blowing cellulose pulp dryer drying a web of cellulose pulp by means of gas supplied from gas outlets of blow boxes of a first drying section.

The present invention also relates to a method of inspecting a first drying section of a gas blowing cellulose pulp dryer.

WO-A-03/004764 discloses such a pulp dryer and such a method.

### Background of the Invention

Cellulose pulp is often dried in a dryer having several superposed horizontal drying decks. Large dryers may have more than 50 drying decks and each drying deck may be about 60 meters in length and 10 meters in width. Turning rolls are arranged at the ends of the drying decks. Cellulose pulp having about 50% water content is fed into the upper drying deck. A web of cellulose pulp is conveyed across the drying decks and the turning rolls convey the web to the next, lower, drying deck. Dry cellulose pulp, having about 10% water content, is outputted at the end of the lowest drying deck. An example of a complete cellulose pulp dryer is illustrated in WO 99/36615.

A cellulose pulp dryer of the kind illustrated in WO 99/36615 may be a convective type of dryer and operate in accordance with the air borne web principle. An example of such a dryer is described in more detail in WO 2009/154549. Hot air is blown onto a web of cellulose pulp by means of upper blow boxes and lower blow boxes. The air blown by the blow boxes transfer heat to the web to dry it. In addition, the air blown by the lower blow boxes keeps the web floating above the lower blow boxes. Hot air is supplied to the blow boxes by means of a circulation air system comprising fans and steam radiators heating the drying air.

At unexpected shutdown of such cellulose pulp dryer, or if the web is ripped, a web tail must be threaded through the drying decks. An example of an automatic tail threading system for threading a pulp dryer is disclosed in WO 2007/108738. Threading is time-consuming, in particular for large dryers, and in the mean time no dry pulp is produced, which is cost-ineffective. Hence, there is a need for avoiding frequent threading procedures and/or making threading as efficient as possible when it is still necessary.

### Summary of the invention

According to a first aspect, the inventive concept relates to a method of inspecting at least a first drying section of a gas blowing cellulose pulp dryer, the cellulose pulp dryer being operative for drying a web of cellulose pulp by means of blowing gas towards the web from gas outlets of blow boxes of the first drying section, the method comprises inspecting the first drying section by detecting radiation reflected from the first drying section; and analysing, based on the detected reflected radiation, at least one of a lateral position of an edge of the web during operation of the dryer, and the occurrence of any residue of the web.

During operation of the cellulose pulp dryer, the method may be used for monitoring the position of the web edges. For instance, a web edge which does not follow the intended path along the first drying section may be detected. If the web edge has begun to move laterally it may get stuck in the dryer and cause stoppage of production. If it is detected that a web edge has begun to move sideways, signals may be sent to control the lateral position of the web. Moreover, at a production stop of the cellulose pulp dryer, before tail threading a new web, the method for inspecting a drying deck may be used for finding residues of the old web that have been left at the first drying section, such that such residues may be removed prior to initiating tail threading a new web. The method may also be used for verifying that there are no web residues at the first drying section. If there would be any residues of the web left inside the dryer when the dryer is restarted, the tail threading may be unsuccessful since the web residues may destroy the new threaded web. The present method for inspection of the first drying section provides, hence, fast localization of residues of the web at the first drying section during stoppages, and/or convenient inspection of the first drying section, and in particular of the position of the web, during operation of the cellulose pulp dryer.

According to one embodiment, the first drying section is inspected by emitting low divergence radiation at the first drying section, detecting reflection of the emitted low divergence radiation, and analysing, based on the detected reflection of the emitted low divergence radiation, at least one of: a position of the web during operation of the dryer, and the occurrence of any residue of the web. Examples of low divergence radiation include laser, IR-light or sonar radiation. An advantage of this embodiment is that low divergence radiation can be emitted along a distinct and well-defined path, which makes the exact localization of residues of the web and/or exact localization of the position of the web very accurate.

According to one embodiment, the method of inspecting the first drying section further comprises sweeping the low divergence radiation at the first drying section. The low divergence radiation may be swept horizontally over a portion of the first drying section or over the entire first drying section. Thus, one emitter of low divergence radiation may be used to inspect a large portion of the first drying section.

According to one embodiment, the method of inspecting the first drying section further comprises detecting reflected radiation at the first drying section, by means of at least two different sensors located at different positions at the first drying section. A drying section may be better covered by two different sensors located at the same drying section but at different horizontal positions at the drying deck. One of the sensors may detect radiation at one side of the first drying section, and the other sensor may detect radiation at another side. It is also possible to have the sensors located at the same side of the first drying section but at different positions. However it may be preferred, at least if the dryer is a horizontal dryer where the drying section is a horizontal drying deck, that the sides are opposing sides for optimal coverage of the drying section such that any blind spot of one sensor may be covered by the other sensor.

Inspecting and monitoring of a web edge may be best carried out if at least one sensor is arranged in line with the web edge. If two sensors are used they may be arranged at opposite corners of a drying section and thus one of the sensors may be optimized for inspection of one web edge and the other sensor may be optimized for inspection of the other web edge. Each of the sensors may be arranged to sweep across at least a portion of the drying section to localize any residues of the web.

According to one embodiment, the method of inspecting the first drying section further comprises inspecting a second drying section of the cellulose pulp dryer. Inspection of the second drying section is made by moving at least one sensor, which detects reflected radiation, from a location at the first drying section to a location at the second drying section, detecting reflected radiation at the second drying section, and analysing, based on the detected reflected radiation, at least one of: a position of the web at the second drying section during operation of the dryer, and the occurrence of any residue of the web at the second drying section. By moving the sensor, along the height or length of the dryer, more than one drying section may be inspected by the same sensor. In this way one or a few sensors may inspect several drying sections of a cellulose pulp dryer. Thus, several drying sections are inspected by means of the same sensor by moving the sensor.

In accordance with another embodiment, said step of detecting reflected radiation comprises detecting reflected radiation by means of an image sensor, and wherein said step of analysing a position of the web and/or the occurrence of any residue comprises analysing an image sensed by the image sensor by means of an image processing device. An advantage of this embodiment is that the image sensor may give an impression of the actual visual appearance of the web residue and/or of the edge of the web, in addition to providing the location of, for example, a residue of the web.

According to a second aspect, the inventive concept relates to a gas blowing cellulose pulp dryer drying a web of cellulose pulp by means of gas supplied from gas outlets of blow boxes of a first drying section. The cellulose pulp dryer comprises an inspection device having at least a first radiation sensor arranged to detect reflected radiation at the first drying section to detect at least one of a position of the web during operation of the dryer, and the occurrence of any residue of the web.

The inspection device may be used for various inspection purposes. Firstly, residues of the web, for example residues which might be left at the first drying deck at stoppage of production, may be detected. The sensor detects radiation which may be reflected from cellulose pulp web residues. The operator of the cellulose pulp dryer will be noticed that there are web residues left inside the dryer and may take action and remove the web residues before the dryer is threaded and restarted. This provides for fast detection of web residues inside a cellulose pulp dryer at a production stop. Secondly, the inspection device may be used for inspection and monitoring of the edges of the web during operation of the dryer. A web edge which does not follow the predetermined path but has begun to move sideways may get stuck in the dryer and cause stoppage of production.

According to one embodiment, the inspection device comprises at least a first low divergence radiation emitter arranged to emit low divergence radiation at the first drying section, at least a first radiation sensor arranged to detect reflected low divergence radiation, and a control system adapted to analyse, based on the detected reflection of the emitted low divergence radiation, at least one of: a position of the web during operation of the dryer, and the occurrence of any residue of the web. An advantage of this embodiment is that the detection of reflection of low divergence radiation provides for a very accurate sensing of positions of web residues and/or an edge of the web.

According to one embodiment the inspection device comprises a sweeping device arranged to sweep the low divergence radiation emitter at the first drying section. In this manner a beam of low divergence radiation may be swept at the drying section, such that a substantial portion of the first drying section may be scanned.

According to one embodiment of the cellulose pulp dryer, the inspection device comprises a sweeping device arranged to sweep the radiation sensor at the first drying section. It may be possible to scan the entire first drying section, or a large portion of the first drying section, by sweeping the radiation sensor across the first drying section. Thus, a large portion of the drying section may be inspected by one sensor.

The gas blowing cellulose pulp dryer may be selected in the group of dryers comprising airborne web dryers and vertical dryers.

According to one embodiment of the cellulose pulp dryer, the inspection device comprises a moving device arranged to move the first low divergence radiation emitter in a vertical or horizontal direction. If the dryer is a horizontal dryer, i.e. comprising an airborne web and having horizontal drying decks it is useful if the emitter of low divergence radiation is movable vertically in order to adjust more exactly the level at which the radiation is emitted. It is preferable that the emitted radiation avoids interference with lower blow boxes where the air outlets are located. If upper blow boxes are used the low divergence radiation should be emitted between the upper and lower blow boxes of the first drying deck. If the dryer is a vertical dryer having vertical windings it is useful if the emitter of low divergence radiation is movable horizontally in order to adjust more exactly the location at which the radiation is emitted.

If the cellulose pulp dryer is an airborne type of dryer having horizontal drying decks a second drying section may be located at a different vertical level than the first drying section, wherein the first radiation sensor may be movable from the first drying section to the second drying section to detect reflected radiation at the second drying section. If the sensor is movable vertically along the height of the dryer, more than one drying sections, *i.e*. drying decks, may be inspected by the same sensor. In this way one or a few sensors may be arranged to inspect several drying decks of a cellulose pulp dryer.

According to one embodiment, the cellulose pulp dryer comprises turning rolls arranged at opposite turning roll sides of the pulp dryer, the turning rolls making the web of cellulose pulp turn when travelling from one drying section to another drying section, the first sensor being arranged at one of the turning roll sides. The sensor is preferably arranged behind a radiation-transparent panel, such as a pane of glass, which may be arranged at the turning roll side, in order to protect the sensor from heat, moist, dust and other particles inside the dryer. It is also advantageously to have a transparent panel so that no door needs to be opened in order for the sensor to detect reflected radiation at a drying section.

According to one embodiment of the cellulose pulp dryer, a second radiation sensor is arranged at one of the turning roll sides. A single sensor may not cover the entire area of one drying section. Since the sensor is often not placed inside the drying section, but outside of the drying section and close the edge of the drying section, and perhaps behind a window pane or some other protective equipment, there might be so called blind spots, *i*.*e*. areas not covered by the sensor. Having two sensors arranged at different locations will lower the risk of blind spots at the drying section.

According to one embodiment of the cellulose pulp dryer, a low divergence radiation emitter is arranged to emit low divergence radiation along an edge of the web and defining a lateral position of the edge of the web. Arranging a low divergence radiation emitter to emit low divergence radiation along and defining a lateral position of an edge of the web allows the edge of the web to be monitored with high accuracy during use of the pulp dryer. It may be preferred to have a second low divergence radiation emitter arranged to emit low divergence radiation along and defining a lateral position of the opposite edge of the web. In one embodiment it is possible to have the low divergence radiation emitter arranged by the side of the edge of the web and emit low divergence radiation towards the web edge. When the low divergence radiation is reflected on the web edge a control unit is used for calculating the position of the web, based on the position of the emitter and the sensor, the angle at which the low divergence radiation is emitted towards the web edge, and the distance to the web edge from the emitter.

According to one embodiment of the cellulose pulp dryer, the inspection device comprises a low divergence radiation emitter being a laser emitter. The low divergence radiation used for inspecting the drying sections should be concentrated enough to propagate along the entire drying section, between the blow boxes, without being obstructed by the blow boxes. Laser light may be suitable for this purpose due to the highly collimated nature of a laser beam.

Alternatively, the low divergence radiation may be sound radiation. High frequency sound radiation having a frequency above 20 000 Hz may then be preferred.

According to one embodiment, the inspection device comprises a camera comprising an image sensor adapted for detecting reflected radiation, the inspection device further comprising an image processor adapted for analysing an image sensed by the image sensor to detect the position of the web, and/or the occurrence of any residue of the web. An advantage of this embodiment is that the image sensor may give an impression of the actual visual appearance of the web residue and/or of the edge of the web, in addition to providing the location of, for example, a residue of the web.

According to one embodiment of the cellulose pulp dryer, the inspection device may communicate with a mobile unit. A handheld mobile unit may be used by an operator of the pulp dryer and makes it possible for the operator to travel between the drying decks and still be able to monitor the web. Furthermore, the operator may receive information, during stops, about at which drying sections residues of the web exist, such that the operator may perform cleaning in those drying sections where it is needed.

Further objects and features of the present invention will be apparent from the description and the claims.

### Brief description of the Drawings

The invention will now be described in more detail with reference to the appended drawings in which:
Fig. 1 is a schematic side view, and illustrates a dryer for drying cellulose pulp;
Fig. 2a is a schematic cross-sectional top view, taken along line II-II of the dryer of Fig. 1, and illustrates the dryer during a stoppage of operation;
Fig. 2b is a schematic cross-sectional top view, taken along line II-II of the dryer of Fig. 1, and illustrates the dryer during normal operation;
Fig. 3 is a schematic close up side view illustrating the dryer in Fig. 1;
Fig. 4 is an enlarged perspective view illustrating an inspection device of the dryer in Fig. 1.
Fig. 5 is a schematic cross-sectional top view, and illustrates an inspection device according to an alternative embodiment.
Fig. 6 is a schematic side view, and illustrates a dryer for drying cellulose pulp according to another embodiment of the present invention.
Fig. 7 is a schematic side view, and illustrates the area VII of Fig. 6.

### Description of preferred Embodiments

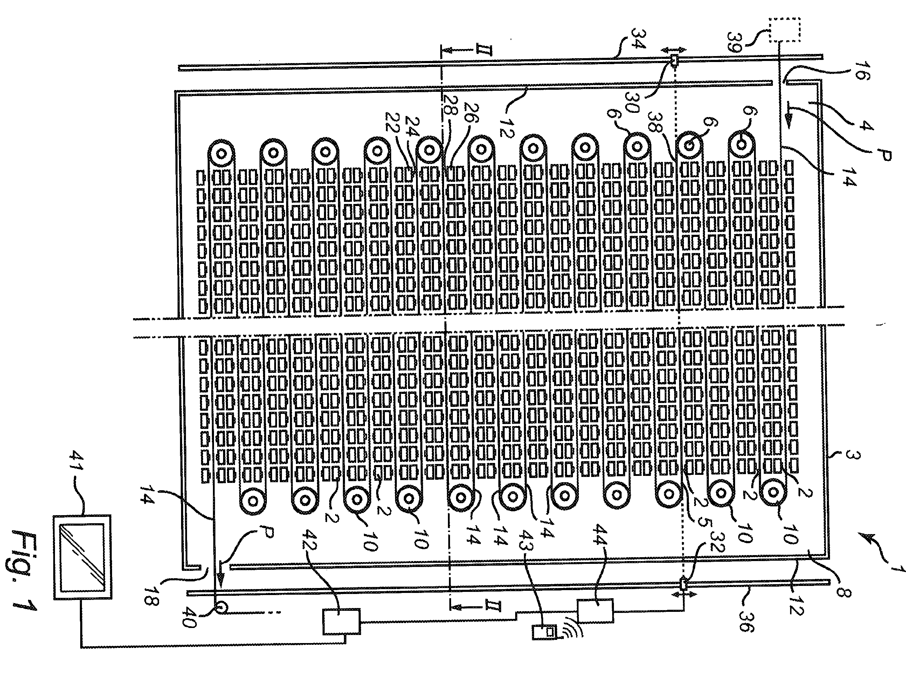

Fig. 1 illustrates a cellulose pulp dryer 1 for drying cellulose pulp in accordance with the air borne web principle where cellulose pulp is dried by means of hot air while travelling along horizontal drying sections 5. The drying sections 5 will, in reference to the embodiment of Fig. 1, be referred to as drying decks 2. Typically, a dryer 1 would comprise 4 - 40 drying decks 2. Large dryers may even comprise 50 drying decks or more, but for clarity purposes a smaller number of drying decks 2 are illustrated in Fig. 1. The dryer 1 illustrated in Fig. 1 comprises 23 superposed drying decks 2 arranged in a housing 3. Optionally, the dryer may also comprise one or more cooling decks, not illustrated in Fig. 1, that are operative for cooling the web after the drying thereof. At a first end 4 of the housing 3 a first column of turnings rolls 6 is arranged, and at a second end 8 of the housing 3 a second column of turning rolls 10 is arranged. The turning rolls 6, 10 are rotatable and arranged at the ends of the drying decks 2, *i*.*e*. in the vicinity the first and second ends 4, 8, respectively, of the housing 3. Each drying deck 2 may typically be between 15 and 80 meters in length and between 1 and 15 meters in width, why the turning roll side walls 12 of the housing 3 normally constitute the short sides of the housing 3. For clarity purposes, only the end portions of the dryer 1, *i*.*e*. the portions of the dryer 1 which are close to the turning roll side walls 12 are illustrated in Fig. 1. The middle section of the dryer 1 is cut away, which is illustrated by vertical dotted lines in Fig. 1.

A wet pulp web 14 enters the dryer 1 via an inlet 16 arranged in a turning roll side wall 12 of the housing 3. In the embodiment of Fig. 1, the inlet 16 is arranged in the upper portion of a turning roll side wall 12, but the inlet may, in an alternative embodiment, be arranged in the lower portion of a turning roll side wall 12. The web 14 is forwarded horizontally, towards the right as illustrated in Fig. 1, in the dryer 1 until the web 14 reaches a turning roll. In the dryer 1 illustrated in Fig. 1, the web 14 will first reach a turning roll 10 of the second column of turning rolls. The web 14 is turned around the turning roll 10, and then travels horizontally towards the left as illustrated in Fig. 1, in the dryer 1 until the web 14 reaches a turning roll 6 of the first column of turning rolls, at which the web 14 is turned again. In this manner the web 14 is fed through the housing 3 from the inlet 16 and travels, in a zigzag manner, from the top to the bottom of the dryer 1, as illustrated by arrows P. The web 14 leaves the dryer 1 via an outlet 18 arranged in one of the turning roll side walls 12 of the housing 2. In the embodiment of Fig. 1, the outlet 18 is arranged in the lower portion of the turning roll side wall 12, but the outlet 18 may, in an alternative embodiment, be arranged in the upper portion of the turning roll side wall 12.

Blow boxes 22, 26 are arranged in each of the drying decks 2. Each drying deck 2 is defined by a row of juxtaposed lower blow boxes 22, which at their upper side discharge heated air, through lower air outlets 24, for drying the web 14. Each row of lower blow boxes 22 is associated with a row of juxtaposed upper blow boxes 26, which at their underside discharge heated air, through upper air outlets 28, for drying the web 14. The air is blown through air outlets 24, 28, which may have any suitable shape, such as circular perforations or so called "eyelid perforations", which may have a similar design as the openings referred to as "eyelid perforations" in WO 97/16594. The air outlets 24, 28 are designed to keep the web 14 in a floating manner slightly above the lower blow boxes 22 in accordance with the air borne web principle. Typically, each drying deck 2 comprises 20-300 lower blow boxes 22 and the same number of upper blow boxes 26, although in Fig. 1 only the portions of the drying decks 2 close to a turning roll side wall 12 are shown, why only 16 lower blow boxes 22 and 16 upper blow boxes 26 are illustrated in each drying deck 2.

Typically air of a temperature of 80 to 250°C is utilized for the drying process. The cellulose pulp entering the dryer 1, from a wet forming station 39, only schematically illustrated in Fig. 1, typically has a dry solids content of 40-60% by weight, and the cellulose pulp web 14 leaving the dryer 1 has a dry solids content of typically 85-95% by weight. The cellulose pulp web 14 leaving the dryer 1 typically has a basis weight of 800 to 1500 g/m², when measured at a moisture content of 0.11 kg water per kg dry substance, and a thickness of 0.8 to 3 mm.

As described above, the web 14 is fed in a floating manner between the lower blow boxes 22 and the upper blow boxes 26. The vertical height of a drying deck 2, *i*.*e*. the vertical distance between the upper side of the lower blow boxes 22 and the lower side of the upper blow boxes 26 of a drying deck 2, is relatively small, for instance between 5 and 50 millimetres, whereas the width and length of a drying deck 2 is relatively large, for instance between 1 to 15 meters in width and between 15 and 80 meters in length.

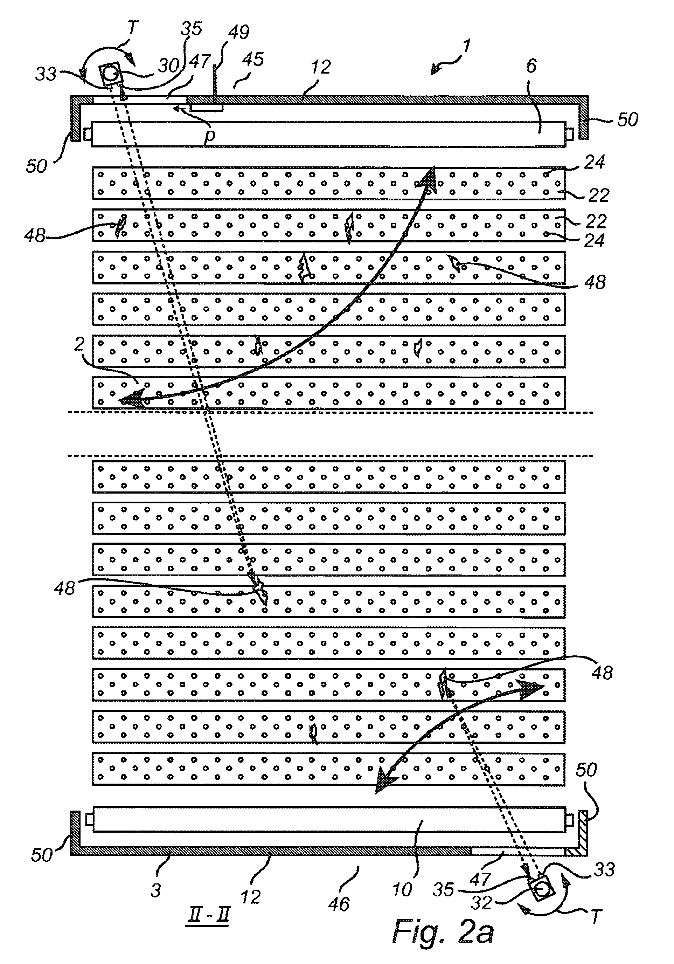

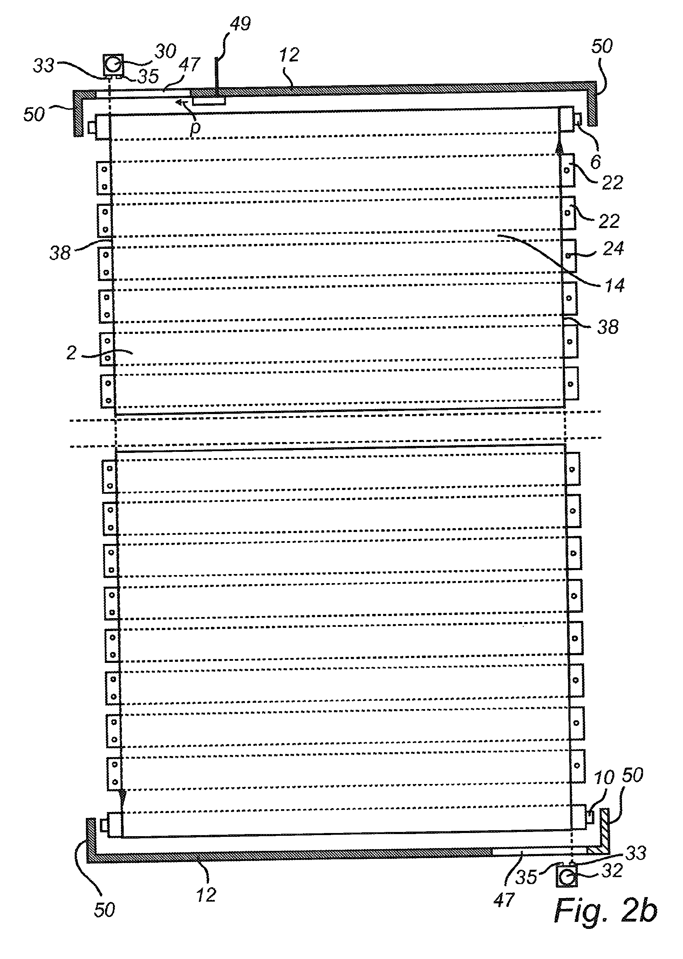

A first low divergence radiation emitting device in the form of a first laser emitting device 30 is arranged on the exterior side of a first turning roll side wall 12 of the housing 3, and a second low divergence radiation emitting device in the form of a second laser emitting device 32 is arranged on the exterior side of an opposite second turning roll side wall 12 of the housing 3. By "low divergence radiation" is meant a radiation that does not scatter very much after being emitted from the emitting device 30, 32. Suitably, a beam of low divergence radiation, such as laser, IR or sonar radiation, that is emitted from a point source at the emitting device 30, 32, should not scatter to a width, after a distance of 50 meters, of more than 30 cm, more preferably not more than 10 cm. One guide 34, 36 is arranged at each of the turning roll side walls 12. Each laser emitting device 30, 32 is arranged movable in a vertical direction along the guide 34, 36, respectively. Thus, the laser emitting devices 30, 32 may each emit low divergence radiation in the form of a laser beam at one drying deck 2 and then be moved vertically and emit a laser beam at another drying deck 2, which is located on a different vertical level than the first-mentioned drying deck 2. The laser emitting devices 30, 32 are also movable vertically at one drying deck to allow fine adjustment of the vertical position of the emitting devices 30, 32 at each drying deck 2. The laser emitting devices 30, 32 may be adjusted to emit radiation at the vertical level of the web 14, or to emit radiation above or below the web 14, depending on the purpose of the measurements. If the laser emitting devices 30, 32 are used for monitoring a web edge during operation of the dryer 1, as described in more detail hereinafter with reference to Fig. 2b, the vertical level of the emitting devices 30, 32 may be adjusted such that radiation is emitted at the vertical level of the web 14. However, if the laser emitting devices 30, 32 are used during a stoppage of production of the dryer 1, as described in more detail hereinafter with reference to Fig. 2a, the laser emitting devices 30, 32 may emit their laser beams at a different vertical level than that level at which the web 14 would travel during operation of the dryer 1, and/or may emit their laser beams at several different vertical levels within one and the same drying deck 2 to get the full picture of the status of the drying deck 2. The laser emitting devices 30, 32 preferably comprises laser emitters 33 of class 1 laser type which are not harmful for people under normal use.

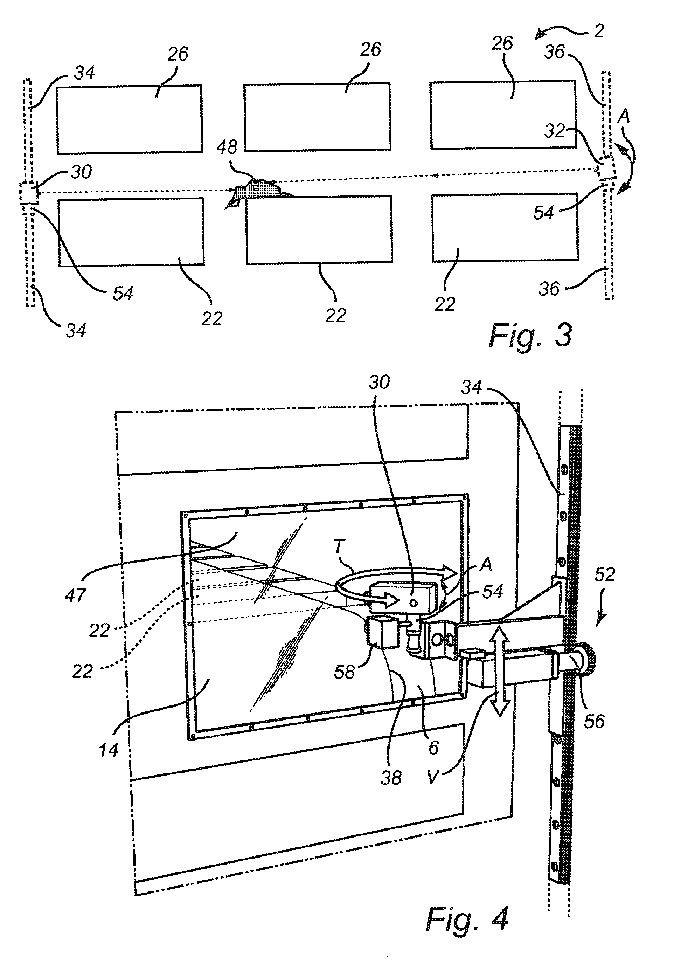

To allow the laser beam to be emitted through the turning roll side walls 12, and to allow detection of reflected laser light, window panes (shown in Figs 2a-b and 4) are arranged in the turning roll side walls 12 at positions where the laser emitting devices 30, 32 may work, *i*.*e*. at the vertical levels corresponding to the drying decks 2.

According to an alternative embodiment, the laser emitting devices and the guides may be arranged on the interior side of the turning roll side walls 12, i.e., inside the actual housing 3, and a protection for the laser emitting devices may be used. The climate inside the housing 3, where the web 14 is dried, is rather humid and hot which may damage the laser emitting devices if no protection is used.

Adjustment and maintenance of the laser emitting devices 30, 32 may be facilitated if the laser emitting devices 30, 32 are located on the exterior side of the turning roll side walls 12, as is illustrated in Fig. 1.

The wet forming station 39, only schematically illustrated in Fig. 1, is arranged upstream of the dryer housing 3 and forms, from a suspension of cellulose pulp, the wet web 14 entering the dryer housing 3.

One or several guiding rolls 40 are arranged at the outlet 18 of the dryer 1 and the web 14 is transported past the guiding roll 40. The guiding roll 40 is arranged to move laterally in relation to the web 14 and, if necessary, exert a pressure on certain portions of the web 14 to correct any unwanted lateral movement of the web edge 38 (see Fig. 2b) inside the dryer 1, such that the web 14 leaving the guiding roll 40 has a correct lateral position with respect to downstream equipment, such as a cutter cutting the web into sheets. The guiding roll 40 communicates with and is controlled by a dryer control system 42. The dryer control system 42 also receives information from an inspection device control system 44, which communicates with the laser emitting devices 30, 32. A handheld mobile unit 43 may be used for communication with the inspection device control system 44 and/or the dryer control system 42. A monitor 41 is connected to the dryer control system 42 to display information related to the operation of the dryer 1.

Fig. 2a and Fig. 2b illustrate one drying deck 2 as seen from above along line II-II of Fig. 1. The drying deck 2 comprises oblong lower blow boxes 22 having air outlets 24. The upper blow boxes are, owing to the perspective, not shown in Figs. 2a and 2b. Along the short sides of each drying deck 2, interior of the turning roll side walls 12, the turning rolls 6, 10 are arranged to forward the web form one drying deck 2 to another, lower, drying deck 2, as described in connection to Fig. 1. The short sides 45, 46 of the drying deck 2 are also referred to as turning roll sides 45, 46.

At each of the two short sides 45, 46 of the drying deck 2, outside of the respective turning roll side wall 12, the first and second laser emitting devices 30, 32 are arranged turnable about a respective vertical axis, as is shown by arrows T at the laser emitting devices 30, 32 in Fig. 2a. Window panes 47 are arranged in the turning roll side walls 12 in front of the laser emitting devices 30, 32 to allow emitted and reflected laser light to pass through. The laser emitting devices 30, 32 are arranged at opposite sides of the drying deck 2, outside of the turning roll side walls 12 and at two opposing corners of the drying deck 2. The laser emitting devices 30, 32 are arranged turnable to be able to detect the occurrence of residues 48 of the web 14 at the drying deck 2 during stops of the dryer 1, which is further described in connection to Fig. 2a below, as well as to inspect the edges 38 of the web 14 during operation of the dryer 1, which is further described in connection to Fig. 2b below.

Having the laser emitting devices 30, 32 at opposing sides of the drying deck 2 minimizes the risk of getting blind spots. Blind spots may occur since the laser emitting devices 30, 32 are not placed inside the actual drying deck 2 but outside of the turning rolls 6, 10 and turning roll side walls 12, *i.e.,* at a horizontal distance from the actual drying deck 2. Since the two laser emitting devices 30, 32 are placed at opposing sides of the drying deck 2, the potential blind spots of the first emitting device 30 would be covered by the second emitting device 32, and vice versa. The laser emitting devices 30, 32 are placed at opposing corners of the drying deck 2 to be able to inspect the edges 38 of the web, which may be done with high accuracy if the laser emitting devices 30, 32 are placed in line with the direction of motion of the web edge 38. Further, the emitting devices 30, 32 are arranged exterior of the turning roll side walls 12, which are the short side walls of the housing 3, with the window panes 47 just in front of the laser emitting devices 30, 32. The window panes 47 need to be kept clean in order for radiation emitted by the laser emitting devices 30, 32, and also reflected radiation, to be able to propagate through the window panes 47. Cleaning of the window panes 47 may be carried out manually or automatically. In Fig. 2a and Fig. 2b an air supply pipe 49, which may be connected to a pressurized air system, or to a fan, is arranged at one of the window panes 47 for the purpose of blowing air, illustrated by arrow *p*, along the window pane 47 to keep the window pane 47 clear.

Fig. 2a illustrates the dryer 1 during a stoppage of production when no web is present. However, nine web residues 48 are illustrated at the drying deck 2 in Fig. 2a. The web residues 48 might have gotten stuck in the drying deck 2, when the web was removed from the dryer 1. Each of the laser emitting devices 30, 32 is provided with a respective low divergence radiation emitter 33. The respective emitter 33 emits a beam of laser light that is swept horizontally over the entire drying deck 2, by turning the respective laser emitting device 30, 32 as illustrated by arrows T. If any web residue 48 is present at the particular drying deck 2 where the laser emitting devices 30, 32 operate for the moment, one or both of the laser beams will be obstructed by such web residue 48. Each of the laser emitting devices 30, 32 is provided with a radiation sensor 35 which analyses reflected light. The obstruction of the laser beam of, for example, the laser emitting device 30, by a web residue 48 will cause a reflection of light from that web residue 48. The reflected light will be analysed by the sensor 35. Based on such analysis, the first laser emitting device 30 may determine the distance to the web residue 48. Thus, when the laser beam of one laser emitting device, for example the first laser emitting device 30, is obstructed by a web residue 48, the laser emitting device 30 will register the degree of turning, i.e., the angle of the laser emitting device 30, at which such web residue 48 was detected, and the distance from the laser emitting device 30 to the web residue 48. This information is sent to the inspection device control system 44, illustrated in Fig. 1, along with information about at which drying deck 2 the web residue 48 was detected. Hence, the inspection device control system 44 will receive the complete spatial coordinates of the web residue 48 from the first laser emitting device 30. The coordinates of the detected web residue 48 may be displayed on the inspection device control system 44, and/or on the monitor 41, and/or may be transmitted to the handheld mobile unit 43, all of which are illustrated in Fig. 1. Thus, an operator working at the dryer 1 will be informed by means of, for example, the handheld mobile unit 43, that there exists web residues 48 at a particular drying deck 2, and the operator will also get the exact location of each web residue 48 at the drying deck 2. If no web residues 48 are detected at a particular drying deck 2 the operator may be informed from the handheld mobile unit 43 that the particular drying deck 2 is clear and the laser emitting devices 30, 32 may be moved to another drying deck 2. The process of scanning one drying deck 2 and then move the laser emitting devices 30, 32 to another drying deck 2 may be automated so that the operator will receive information regarding web residues after a complete scanning of all or of several of the drying decks 2.

When analysing the signals from the laser emitting devices, web residues 48 which are left at a drying deck 2 close to the sides of the housing 3, *i*.*e*. close to the long side housing wall 50 of the drying deck 2, may be difficult to separate from the housing wall 50. However, the web residues 48 may have much larger reflectivity than the housing wall 50. Thus, the signal strength of the laser measurements may be used to separate signals occurring due to the laser beam being obstructed by web residues 48 from signals occurring due to the laser beam being obstructed by the housing side wall 50.

Fig. 2b illustrates the dryer 1 during operation. A web 14 is forwarded over the lower blow boxes 22, from one turning roll 6 to the other turning roll 10. Each of the edges 38 of the web 14 is located slightly interior of the end of the blow boxes 22 to ensure that the web 14 will be borne by air from the air outlets 24 along the entire width of the web 14. As described above, the first and second laser emitting devices 30, 32 are arranged at opposite corners of the drying deck 2. The laser emitting devices 30, 32 send laser light along the web edges 38, at the same vertical level as that of the web 14, to monitor the lateral position of the web edges 38. If it is detected that a web edge 38 of the web 14 moves, in a lateral direction, away from its normal track it is important to make adjustments to bring the web 14 back to its normal track. Otherwise the web 14 may get ripped against the interior structures of the housing 3 or it may get stuck at the sides of the turning rolls 6, 10. Hence, for example, the sensor 35 of the first emitting device 30 may detect reflected light caused by the fact that the web edge 38 has broken the laser beam emitted from the emitter 33 of the first emitting device 30. Such detection triggers a signal to be sent to the inspection device control system 44, illustrated in Fig. 1. Such a signal is an indication that the web 14 has moved, unintentionally, to the left, as seen in Fig. 2b. In response to such a signal, the inspection device control system 44 sends a signal to the dryer control system 42, illustrated in Fig. 1, to the effect that the lateral position of the web 14 needs to be adjusted. The dryer control system 42 sends a signal to the wet forming station 39 (Fig. 1) arranged upstream of the dryer housing 3 and forming the wet web 14 entering the dryer housing 3. The wet forming station 39 can, as is per se known, adjust the dry solids profile across the width of the web 14 to make the web 14 move in the desired lateral direction. Hence, in response to the signal sent by the dryer control system 42, the wet forming station 39 adjusts the dry solids profile of the web 14 to correct the incorrect lateral position detected by the first emitting device 30.

Fig. 3 illustrates three lower blow boxes 22 and three upper blow boxes 26 in a close up view at a stop of the dryer 1. In Fig. 3 there is no web present, however one residue 48 of the web is located on the middle one of the three lower blow boxes 22 illustrated in Fig. 3. Two sweeping devices 54 are arranged to sweep laser light horizontally above the lower blow boxes 22 and below the upper blow boxes 26 of the drying deck 2. Each sweeping device 54 is connected to a respective one of the first and second laser emitting devices 30, 32. Laser light from the two laser emitting devices 30, 32 are used for detecting the web residue 48. The sweeping devices 54 and laser light emitting devices 30, 32 are located at the respective short sides of the dryer 1, as described in connection to Figs. 1, 2a and 2b. Each sweeping device 54 having a laser emitting device 30, 32 is arranged on a guide 34, 36, as is illustrated in Fig. 3. The sweeping devices 54 and laser emitting devices 30, 32 are movable in a vertical direction along the guides 34, 36, respectively, to be able to inspect the drying deck 2 at a different vertical level or to inspect another drying deck located at a different vertical level than the first-mentioned drying deck 2. In addition, it is possible to tilt the sweeping devices 54 and laser emitting devices 30, 32. Such tilting is illustrated by arrow A in Fig. 3. Such tilting could be used to fine-tune the direction in which the laser light is emitted.

Fig. 4 illustrates one of the end portions of the cellulose pulp dryer 1 described in connection to Figs. 1-3. An inspection device 52 comprises the laser emitting device 30 arranged on the sweeping device 54 to be turnable in the horizontal plane. Thus, the inspection device 52 with the laser emitting device 30 and the sweeping device 54 may sweep a beam of laser light horizontally, as illustrated by means of an arrow T. The laser emitting device 30 and sweeping device 54 are arranged on the guide 34 and are movable along the guide 34 by means of a moving device 56, thereby the laser emitting device 30 and sweeping device 54 are movable in a vertical direction, which is illustrated by an arrow V in Fig. 4. It is also possible to tilt the laser emitting device 30 and sweeping device 54, which is illustrated by an arrow A. The laser emitting device 30 is arranged to emit laser light through the window pane 47 arranged in the turning roll side wall, and to detect reflected laser light coming out via the window pane 47. Thus, the laser emitting device 30 may be arranged exterior of the turning roll side wall, but still emit laser light through the window pane 47 and over the lower blow boxes 22 and the turning roll 6, and detect reflected laser light, as described in connection to Figs. 2a, 2b and 3. The inspection device 52 further comprises the inspection device control system 44, illustrated in Fig. 1, by means of which the signals received from the radiation sensors 35 of the emitting devices 30, 32 may be analyzed with respect to the occurrence and position of web residues 48, or with respect to the position of the edge 38 of the web 14.

In Fig. 4 a camera 58 is arranged at the inspection device 52 for filming the web 14. The camera 58 can be used as a supplementary or alternative means for monitoring of the position of the web 14 and/or the edge 38 of the web 14 relative to the turning roll 6. The film taken by the camera 58 may be displayed in real time on the monitor 41 (Fig. 1). An operator may, based on visual information obtained from the monitor 41, determine whether or not a correction of the lateral position of the web 14 is necessary.

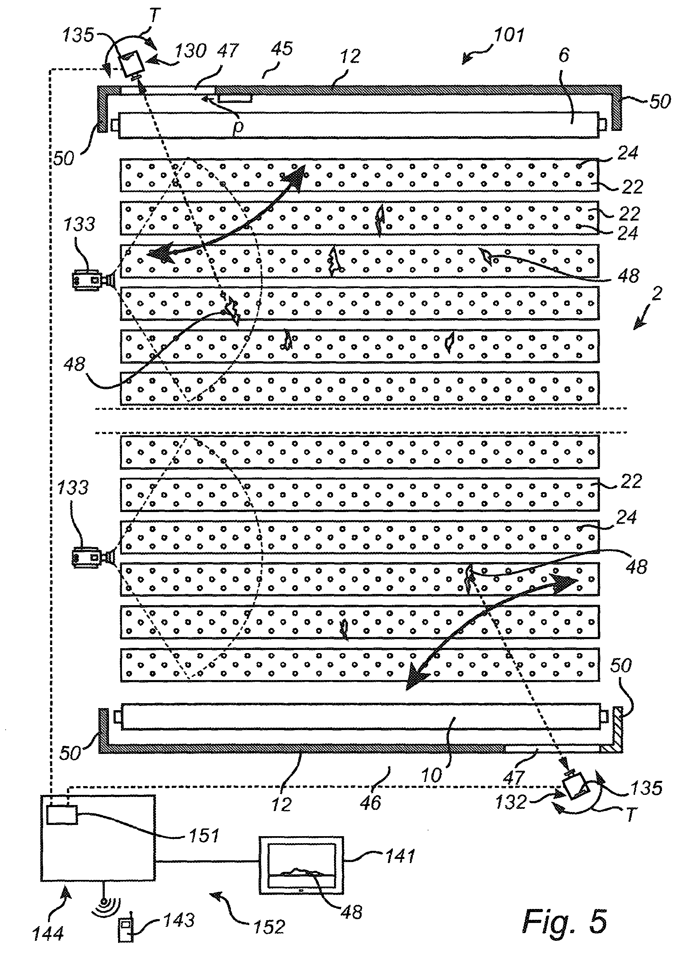

Fig. 5 illustrates one drying deck 2 of a dryer 101, illustrated in a similar perspective as that of Fig. 2a, and equipped with an inspection device 152 in accordance with an alternative embodiment. Those parts of the drying deck 2 that are similar to what has been described with reference to Fig. 2a have been given the same reference numerals, and are not described in any further details. The drying deck 2 comprises oblong lower blow boxes 22 having air outlets 24.

The inspection device 152 comprises a first camera device 130, a second camera device 132, optionally one or more lamps 133, an inspection device control system 144, a monitor 141, and a hand-held mobile unit 143.

The first and second camera devices 130, 132 are arranged at each of the two short sides 45, 46 of the drying deck 2, outside of the respective turning roll side wall 12. Optionally, the camera devices 130, 132 may be arranged turnable about a respective vertical axis, as is shown by arrows T. Furthermore, moving devices, similar to the moving devices 56 illustrated in Fig. 4, may be arranged for adjusting a vertical position in relation to the drying deck 2 of the respective camera device 130, 132, and for moving the respective camera devices 130, 132 between different drying decks 2, located at different vertical levels, of the cellulose pulp dryer 1. Window panes 47 are arranged in the turning roll side walls 12 in front of the camera devices 130, 132 to allow the camera devices 130, 132 to detect reflected light from the interior of the drying deck 2.

Fig. 5 illustrates the dryer 101 during a stoppage of production. A couple of web residues 48 are illustrated at the drying deck 2 in Fig. 5. The web residues 48 might have gotten stuck in the drying deck 2, when the web was removed from the dryer 1. The lamps 133 are activated and emit radiation in the form of light into the interior of the drying deck 2. The light emitted by lamps 133 could typically be a visible light emitted by fluorescent tubes, light emitting diodes, or some other type of light emitter. Alternatively, the radiation emitted by lamps 133 could be a non-visible light, for example IR or UV light. It is also possible to have the lamps 133, or other suitable devices, emit other types of radiation, such as sonar. Typically, the light emitted by the lamps 133 is a scattered light, which is spread widely in the interior of the drying deck 2. Each of the camera devices 130, 132 is provided with a radiation sensor in the form of an image sensor 135. The respective image sensor 135 may typically be a CMOS or CCD type sensor, which are per se known image sensors. The light emitted by the lamps 133 is obstructed by the web residues 48 present at the drying deck 2. As an effect of such obstruction, light emitted by the lamps 133 is reflected on the residues 48. The reflected radiation, i.e., the reflected light, is detected by the image sensors 135 of the camera devices 130, 132. The respective image sensor 135 sends image information to an image processor 151 included in the inspection device control system 144. The image processor 151 analyses the image information provided by the image sensor 135 and may, based on such analysis, determine the existence and position of web residue 48. The coordinates of the detected web residue 48 may be displayed on the monitor 141 by the control system 144, and/or may be transmitted to the handheld mobile unit 143. Thus, an operator working at the dryer 101 will be informed, by means of, for example, the handheld mobile unit 143, that web residues 48 are present at a particular drying deck 2, and the operator will also get the exact location of each web residue 48 at the drying deck 2. The actual image of the detected web residue 48 may also be displayed on the monitor 141 controlled by the system 144, such that an operator may view the web residue 48. The process of scanning one drying deck 2 and then move the camera devices 130, 132 to another drying deck 2 may be automated so that the operator will receive information regarding web residues 48 after a complete scanning of all or of several of the drying decks 2.It will be appreciated that the inspection device 152 may also be utilized for detecting a position of an edge of the web of pulp during operation of the dryer 101, in a similar manner as described hereinbefore with reference to Fig. 4.

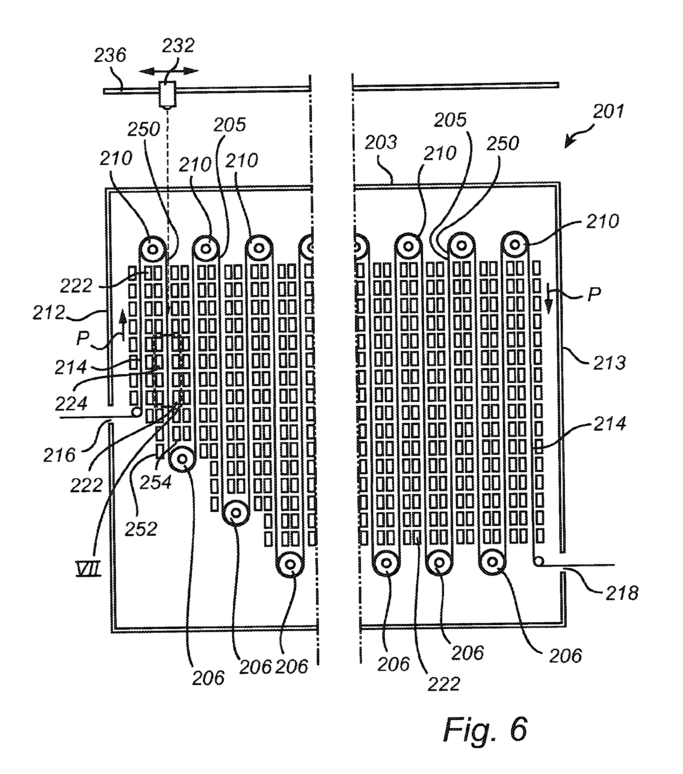

Fig. 6 illustrates a vertical cellulose pulp dryer 201 a where cellulose pulp web 214 is dried by means of hot air while travelling along drying sections 205. The drying sections 205 will, in reference to the embodiment of Fig. 6, be referred to as drying windings 250. Thus, the cellulose pulp web 214 is dried while travelling along the vertical windings 250 between upper turning rolls 210 and lower turning rolls 206. The turning rolls 206, 210 are arranged at the ends of the windings 250, *i.e.* at the top of the dryer 201 and at the bottom of the dryer 201 in Fig. 6.

A vertical dryer 201 may comprise a high number of windings 250, for instance 40 windings. For clarity purposes a smaller number of windings 250 are illustrated in Fig. 6, and the middle section of the dryer 201 is cut away, which is illustrated by vertical dotted lines in Fig. 6. The dryer 201 illustrated in Fig. 6 comprises 14 windings 250 arranged in a housing 203. In addition it is possible to have a lower number of windings than the 14 windings illustrated in Fig. 6.

A wet pulp web 214 enters the dryer 201 via an inlet 216 arranged in a turning roll side wall 212 of the housing 203. In the embodiment of Fig. 6 the inlet 216 is arranged in the middle portion of the left side wall 212, but the inlet may, in an alternative embodiment, be arranged in another portion of the side wall 212. The web 214 is forwarded essentially vertically, upwards as illustrated with an arrow P in Fig. 6, in the dryer 201 until the web 214 reaches a rotatable upper turning roll 210. The web 214 is turned around the upper turning roll 210 and travels essentially vertically downwards as illustrated in Fig. 6, in the dryer 201 until the web 214 reaches a lower rotatable turning roll 206 at which the web 214 is again turned. In this manner the web 214 is fed through the housing 203 from the inlet 216 and travels, in a zigzag manner, from one side of the dryer 201 to the other side of the dryer 201. The web 214 leaves the dryer 201 via an outlet 218 arranged in another side wall 213 of the housing 203. In the embodiment of Fig. 6, the outlet 218 is arranged in the lower portion of the right side wall 213, but the outlet 218 may, in an alternative embodiment, be arranged in another portion of the side wall 213.

The web 214 is dried by means of air supplied from blow boxes 222 arranged to the left and to the right of each winding 250 of the web 214. Thus, two columns 252, 254 of blow boxes 222 are arranged at each web winding 250. The blow boxes 222 of the left column 252 of blow boxes discharge air on their left side and the blow boxes 222 of the right column 254 of blow boxes discharge air on their right side.

The horizontal distance between two corresponding blow boxes 222, *i.e*. between a blow box 222 from a left column 252 of blow boxes to the closest blow box 222 from a right column 254 of blow boxes on the other side of the web 214, is relatively small, for instance between 4 and 80 millimetres, whereas the width and length of a winding 250 is relatively large, for instance between 1 to 15 meters in width and between 2 and 60 meters in height. Length is here referred to as the vertical distance between an upper turning roll 210 and a lower turning roll 206.

As is seen in Fig. 6 the length of the windings 250 is not constant in the entire dryer 201. The length of the windings 250 in the portion of the dryer 201 which is close to the inlet 216 is shorter than in the remaining dryer 201, followed by a stepwise increasing length of the windings 250. Having stepwise increasing length of the windings 250 may decrease the risk of web break in the portion of the dryer 201 which is close to the inlet 216, where the web 214 is relatively heavy, due to large water content, and fragile. Thus, having a shorter windings 250 close to the inlet 216 decreases the risk of web breaks. It is however possible to have the same length of all windings 250 in the entire dryer 201.

A low divergence radiation emitting device 232 is arranged on the exterior side of the upper turning roll side wall of the housing 203. The low divergence radiation emitting device 232, which may be of the same sort as the one described in connection to Figs 1-5 above, is arranged on a horizontal guide 236. The radiation emitting device 232 is arranged movable in a horizontal direction along the guide 236. Thus, the emitting device 232 may emit low divergence radiation at one winding 250 and then be moved horizontally to another winding 250. The emitting device 232 is also movable horizontally at one drying winding 250 to allow fine adjustment of the position at the winding 250.

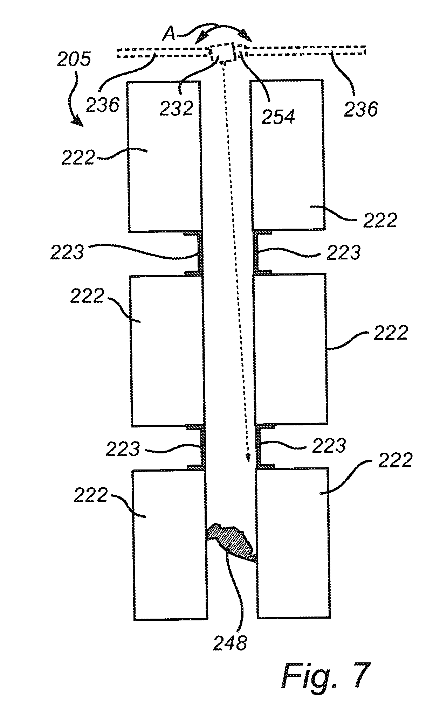

If the emitting device 232 is used for monitoring a web edge during operation of the dryer 201 the location of the emitting device 232 may be adjusted such that radiation is emitted right at the level of the web 214, which is shown in Fig. 6. However, if the emitting device 232 is used during a stoppage of production of the dryer 201, as described hereinafter with reference to Fig. 7, the emitting device 232 may emit a beam at a location closer to the drying boxes 222 to detect any web residue which might be stuck on a blow box 222.

To allow the laser beam to be emitted through the housing 203, and to allow detection of reflected light, window panes (not illustrated in Fig. 6 but are shown in Figs 2a-b and 4) are arranged in the housing wall at positions where the emitting device 232 may work. According to an alternative embodiment, the laser emitting devices and the guides may be arranged on the interior side of the housing 203 and a protection for the emitting device may be used.

The embodiment in Fig. 6 illustrates only one emitting device 232 however any suitable number if emitting devices may be used.

Further, the embodiment in Fig. 6 does not show any dryer control system, inspection device control system, monitor or handheld mobile unit. However a dryer control system 42, inspection device control system 44, monitor 41 and a handheld mobile unit 43, which are shown in Fig. 1, may be included also in the embodiment of Fig. 6.

Fig. 7 is an enlarged side view of the area VII of Fig. 6 and illustrates a portion of one drying section 205 of the dryer 201 in Fig. 6. Blow boxes 222 are arranged to the left and to the right of the web 214 to discharge hot air onto a web in use of the dryer 201. The dryer 201 in Fig. 7 is illustrated during a stoppage of production and no web is present. At a stoppage of production, for instance due to a web break, web pieces which are left in the dryer 201 normally fall by gravity and may easily be collected and removed from the dryer 201. Wire nettings 223 are arranged between vertically adjacent blow boxes 222 to prevent web residues from getting stuck between vertically adjacent blow boxes 222. The wire nettings 223 allow drying air blown by the blow boxes 222 to be evacuated through the wire nettings 223.

Even though the wire nettings 223 prevent web residues from getting stuck between vertically adjacent blow boxes there is still a risk that web residues may get stuck in the gap horizontally adjacent blow boxes. Such a web piece is illustrated in Fig. 7 where one web residue 248 is stuck between two vertically adjacent blow boxes 222.

A sweeping device 254 is arranged to sweep radiation vertically between the two rows of blow boxes 222 of the drying section 205. The sweeping device 254 holds the emitting devices 232 and is used for detecting the web residue 248. The major sweeping movement is made across the vertical drying section 205 to detect web pieces 248 at a large portion of, or the entire, drying section 205. However it is also possible to adjust the sweeping device 254 in a vertical plane which is perpendicular to the vertical drying section 250, as is illustrated in Fig. 7 by an arrow A.

The sweeping device 254 is arranged on the guide 236. The sweeping device 254 and emitting device 232 are movable in a along the guide 236 in order to be able to inspect the drying section 205 from different locations or to inspect another drying section 205. In addition, as was just mentioned, it is possible to tilt the sweeping device 254 and emitting device 232, which is illustrated by arrow A in Fig. 7. Such tilting could be used to fine-tune the direction in which the radiation is emitted or to better cover the entire drying section 205.

Fig. 7 does not show any inspection device, sweeping device, moving device, camera or monitor. However an inspection device 52, a sweeping device 54, a moving device 56, a camera 58 and a monitor 41 as the ones illustrated in Fig. 4 may be included in the embodiment of Fig. 7.

The person skilled in the art realizes that the present invention by no means is limited to the embodiments described above. On the contrary, many modifications and variations are possible within the scope of the appended claims.

For instance, any suitable number of laser emitting devices 30, 32, 232 and/or camera devices 130, 132 may be used. In a small dryer it may be sufficient with one or two such devices. In a large dryer it might be optimal to use for instance four or eight laser emitting devices, and/or camera devices. Moreover, the laser emitting devices do not necessarily have to work in pairs scanning the same drying deck at the same time. It might be preferred that one laser emitting device starts at the top of the dryer, scanning the uppermost drying deck first and working downwards, whereas another laser emitting device may start from the bottom of the dryer, scanning the lowermost deck first and working upwards. Or, there might be a certain area or level of the dryer where it is more common that web residues are left or get stuck than other areas or levels and the scanning may start at that area or level.

The scanning procedure may also be different depending on whether the scanning takes place during operation of the dryer or during stoppage of production. Furthermore, scanning for web residues 48, 248 could be made also during operation of the dryer 1, 101, if the existence of residues 48, 248 is suspected. Furthermore, other types of low divergence radiation than laser light may be used for detection of web position and/or web residues. Examples of such other types of low divergence radiation include, but are not limited to, IR-light and sonar radiation.

## Claims

1. Method of inspecting at least a first drying section (5) of a gas blowing cellulose pulp dryer (1) selected in the group of dryers comprising airborne web dryers and vertical dryers, the cellulose pulp dryer (1) being operative for drying a web (14) of cellulose pulp by means of blowing gas towards the web (14) from gas outlets (24) of blow boxes (22, 26) of the first drying section (5), the method being **characterized in** inspecting the first drying section (5) by
- detecting radiation reflected from the first drying section (5); and
- analysing, based on t e detected reflected radiation, at least one of a lateral position of an edge (38) of the web (14) during operation of the dryer (1), and the occurrence of any residue (48) of the web (14).

2. Method according to claim 1, further comprising inspecting the first drying section (5) by
- emitting low divergence radiation at the first drying section (5), the low divergence radiation being a beam of low divergence radiation that is emitted from a point source at an emitting device and does not scatter to a width, after a distance of 50 meters, of more than 30 cm;
- detecting reflection of the emitted low divergence radiation; and
- analysing, based on the detected reflection of the emitted low divergence radiation, at least one of a position of the web (14) during operation of the dryer (1), and the occurrence of any residue (48) of the web (14).

3. Method according to claim 2, wherein inspecting the first drying section (5) further comprises
- sweeping the low divergence radiation beam over at least a portion of the first drying section (5).

4. Method according to anyone of the preceding claims, wherein inspecting the first drying section (5) further comprises
- detecting reflected radiation at the first drying section (5), by means of at least two different sensors (35) located at different positions at the first drying section (5).

5. Method according to anyone of the preceding claims, further comprising inspecting a second drying section (5) of the cellulose pulp dryer (1) by
- moving at least one sensor (35; 135), which detects reflected radiation, from a location at said first drying section (5) to a location at said second drying section (5),
- detecting reflected radiation at the second drying section (5); and
- analysing, based on the detected reflected radiation, at least one of a position of the web (14) at the second drying section (5) during operation of the dryer (1), and the occurrence of any residue (48) of the web (14) at the second drying section (5).

6. A method according to any one of the preceding claims, wherein said step of detecting reflected radiation comprises detecting reflected radiation by means of an image sensor (135), and wherein said step of analysing a position of the web (14), and/or the occurrence of any residue (48) of the web (14), comprises analysing an image sensed by the image sensor (135) by means of an image processing device (151).

7. A gas blowing cellulose pulp dryer (1) selected in the group of dryers comprising airborne web dryers and vertical dryers and drying a web (14) of cellulose pulp by means of gas supplied from gas outlets (24) of blow boxes (22, 26) of a first drying section (5) of the pulp dryer, **characterized in that** the cellulose pulp dryer (1) comprises an inspection device (52, 152) having at least a first radiation sensor (35, 135) arranged to detect reflected radiation at the first drying section (5) to detect at least one of a lateral position of an edge (38) of the web (14) during operation of the dryer (1), and the occurrence of any residue (48) of the web (14).

8. A gas blowing cellulose pulp dryer (1) according to claim 7, wherein the inspection device (52) comprises at least a first low divergence radiation emitter (33) arranged to emit low divergence radiation at the first drying section (5), the low divergence radiation being a beam of low divergence radiation that is emitted from a point source at the emitting device and does not scatter to a width, after a distance of 50 meters, of more than 30 cm, at least a first radiation sensor (35) arranged to detect reflected low divergence radiation, and a control system (44) adapted to analyse, based on the detected reflection of the emitted low divergence radiation, at least one of a position of the web (14) during operation of the dryer, and the occurrence of any residue (48) of the web (14).

9. A gas blowing cellulose pulp dryer (1) according to claim 8, wherein the inspection device (52) comprises a moving device (56) arranged to move said first low divergence radiation emitter (33) to a second drying section of the cellulose pulp dryer (1).

10. A gas blowing cellulose pulp dryer (1) according to any one of claims 8 or 9, wherein the inspection device (52, 152) comprises a sweeping device (54) arranged to sweep the low divergence radiation emitter (33) and the radiation sensor (35, 135) over at least a portion of the first drying section (5).

11. A gas blowing cellulose pulp dryer (1) according to anyone of claims 7 - 10, wherein the dryer (1) comprises turning rolls (6, 10) arranged at opposite turning roll sides (45, 46) of the dryer (1), the turning rolls (6, 10) making the web (14) of cellulose pulp turn when travelling from one drying section (5) to another drying section (5), said first radiation sensor (35, 135) being arranged at one of the turning roll sides (45, 46).

12. A gas blowing cellulose pulp dryer (1) according to claim 11, wherein a second radiation sensor (35, 135) is arranged at one of said turning roll sides (45, 46).

13. A gas blowing cellulose pulp dryer (1) according to anyone of claims 8 - 12, wherein the low divergence radiation emitter (33) is arranged to emit low divergence radiation along an edge (38) of the web (14), and defining a lateral position of the edge (38) of the web (14).

14. A gas blowing cellulose pulp dryer (1) according to anyone of claims 7 - 13, wherein the inspection device (52) comprises a low divergence radiation emitter (33) in the form of a laser emitter (33).

15. A gas blowing cellulose pulp dryer (1) according to anyone of claims 7 - 14, wherein the inspection device (152) comprises a camera device (130,132) comprising an image sensor (135) adapted for detecting reflected radiation, the inspection device (152) further comprising an image processor (151) adapted for analysing an image sensed by the image sensor (135) to detect the position of the web (14), and/or the occurrence of any residue (48) of the web (14).

16. A gas blowing cellulose pulp dryer (1) according to anyone of claims 7 - 15, wherein said inspection device (52, 152) communicates with a mobile unit (43, 143).

17. A gas blowing cellulose pulp dryer (1) according to anyone of claims 7 - 16, wherein said inspection device (52) comprises a camera unit (58) adapted to film an edge (38) of the web (14).

## Patentansprüche

1. Verfahren zum Überprüfen von mindestens einer ersten Trockenpartie (5) eines Gasblaszellstoffpulpetrockners (1), der aus der Gruppe von Trocknern ausgewählt ist, die Schwebetrockner und Hochtrockner umfasst, wobei der Zellstoffpulpetrockner (1) betriebsfähig ist, eine Bahn (14) aus Zellstoffpulpe mittels Blasen von Gas auf die Bahn (14) aus Gasauslässen (24) von Blaskästen (22, 26) von der ersten Trockenpartie (5) zu trocknen, wobei das Verfahren **gekennzeichnet ist durch** Überprüfen der ersten Trockenpartie (5) **durch**
- Detektieren von Strahlung, die von der ersten Trockenpartie (5) reflektiert wird; und
- Analysieren von mindestens einem von einer seitlichen Position eines Randes (38) der Bahn (14) während des Betriebs des Trockners (1) und des Auftretens irgendeines Rückstandes (48) der Bahn (14) basierend auf der detektierten reflektierten Strahlung.

2. Verfahren nach Anspruch 1, weiter umfassend das Überprüfen der ersten Trockenpartie (5) durch
- Emittieren von Strahlung mit niedriger Strahldivergenz an der ersten Trockenpartie (5), wobei die Strahlung mit niedriger Strahldivergenz ein Strahl von Strahlung mit niedriger Strahldivergenz ist, die von einer Punktquelle an einer Emittiervorrichtung emittiert wird, und die nach einem Abstand von 50 Metern nicht zu einer Breite von mehr als 30 cm streut;
- Detektieren von Reflexion der emittierten Strahlung mit niedriger Strahldivergenz; und
- Analysieren von mindestens einem von einer Position der Bahn (14) während des Betriebs des Trockners (1) und dem Auftreten irgendeines Rückstandes (48) der Bahn (14) basierend auf der detektierten Reflexion der emittierten Strahlung mit niedriger Strahldivergenz.

3. Verfahren nach Anspruch 2, wobei das Überprüfen der ersten Trockenpartie (5) weiter umfasst
- überstreichendes Bewegen des Strahls mit niedriger Strahldivergenz über mindestens einen Abschnitt von der ersten Trockenpartie (5).

4. Verfahren nach einem der vorstehenden Ansprüche, wobei das Überprüfen der ersten Trockenpartie (5) weiter umfasst
- Detektieren von reflektierter Strahlung an der ersten Trockenpartie (5) mittels mindestens zwei unterschiedlicher Sensoren (35), die sich an unterschiedlichen Positionen an der ersten Trockenpartie (5) befinden.

5. Verfahren nach einem der vorstehenden Ansprüche, weiter umfassend das Überprüfen einer zweiten Trockenpartie (5) des Zellstoffpulpetrockners (1) durch
- Bewegen von mindestens einem Sensor (35; 135), der reflektierte Strahlung detektiert, von einem Ort an der ersten Trockenpartie (5) zu einem Ort an der zweiten Trockenpartie (5),
- Detektieren von reflektierter Strahlung an der zweiten Trockenpartie (5); und
- Analysieren von mindestens einem von einer Position der Bahn (14) an der zweiten Trockenpartie (5) während des Betriebs des Trockners (1) und des Auftretens irgendeines Rückstandes (48) der Bahn (14) an der zweiten Trockenpartie (5) basierend auf der detektierten reflektierten Strahlung.

6. Verfahren nach einem der vorstehenden Ansprüche, wobei der Schritt des Detektierens der reflektierten Strahlung das Detektieren der reflektierten Strahlung mittels eines Bildsensors (135) umfasst, und wobei der Schritt des Analysierens einer Position der Bahn (14) und/oder des Auftretens irgendeines Rückstandes (48) der Bahn (14) das Analysieren eines Bildes umfasst, das durch den Bildsensor (135) mittels einer Bildverarbeitungsvorrichtung (151) erfasst wird.

7. Gasblaszellstoffpulpetrockner (1), der aus der Gruppe von Trocknern ausgewählt ist, die Schwebetrockner und Hochtrockner umfasst, und der eine Bahn (14) aus Zellstoffpulpe mittels Gas trocknet, das aus Gasauslässen (24) von Blaskästen (22, 26) von einer ersten Trockenpartie (5) des Pulpetrockners zugeführt wird, **dadurch gekennzeichnet, dass** der Zellstoffpulpetrockner (1) eine Prüfvorrichtung umfasst (52, 152), die mindestens einen ersten Strahlungssensor aufweist (35, 135), der angeordnet ist, um reflektierte Strahlung an der ersten Trockenpartie (5) zu detektieren und mindestens eines von einer seitlichen Position eines Randes (38) der Bahn (14) während des Betriebs des Trockners (1) und dem Auftreten irgendeines Rückstands (48) der Bahn (14) zu detektieren.

8. Gasblaszellstoffpulpetrockner (1) nach Anspruch 7, wobei die Prüfvorrichtung (52) mindestens einen ersten Strahler mit niedriger Strahldivergenz (33) umfasst, der ausgeführt ist, Strahlung mit niedriger Strahldivergenz an der ersten Trockenpartie (5) zu emittieren, wobei die Strahlung mit niedriger Strahldivergenz ein Strahl von Strahlung mit niedriger Strahldivergenz ist, die von einer Punktquelle an der Emittiervorrichtung emittiert wird und nach einer Entfernung von 50 Metern nicht zu einer Breite von mehr als 30 cm streut, wobei mindestens ein erster Strahlungssensor (35) angeordnet ist, um reflektierte Strahlung mit niedriger Strahldivergenz zu detektieren, und ein Steuersystem (44), das angepasst ist, basierend auf der detektierten Reflexion der emittierten Strahlung mit niedriger Strahldivergenz mindestens eines von einer Position der Bahn (14) während des Betriebs des Trockners und des Auftretens irgendeines Rückstandes (48) der Bahn (14) zu analysieren.

9. Gasblaszellstoffpulpetrockner (1) nach Anspruch 8, wobei die Prüfvorrichtung (52) eine sich bewegende Vorrichtung (56) umfasst, die ausgeführt ist, den ersten Strahler mit niedriger Strahldivergenz (33) zu einer zweiten Trockenpartie des Zellstoffpulpetrockners (1) zu bewegen.

10. Gasblaszellstoffpulpetrockner (1) nach einem der Ansprüche 8 oder 9, wobei die Prüfvorrichtung (52, 152) eine Bewegungsvorrichtung (54) umfasst, die ausgeführt ist, den Strahler mit niedriger Strahldivergenz (33) und den Strahlungssensor (35, 135) über mindestens einen Abschnitt von der ersten Trockenpartie (5) überstreichend zu bewegen.

11. Gasblaszellstoffpulpetrockner (1) nach einem der Ansprüche 7 - 10, wobei der Trockner (1) Drehrollen (6, 10) umfasst, die an entgegengesetzten Drehrollenseiten (45, 46) des Trockners (1) angeordnet sind, und die Drehrollen (6, 10) bewirken, dass die Bahn (14) aus Zellstoffpulpe sich dreht, wenn sie sich von einer Trockenpartie (5) zu einer anderen Trockenpartie (5) bewegt, wobei der erste Strahlungssensor (35, 135) an einer der Drehrollenseiten (45, 46) angeordnet ist.

12. Gasblaszellstoffpulpetrockner (1) nach Anspruch 11, wobei ein zweiter Strahlungssensor (35, 135) an einer der Drehrollenseiten (45, 46) angeordnet ist.

13. Gasblaszellstoffpulpetrockner (1) nach einem der Ansprüche 8 - 12, wobei der Strahler mit niedriger Strahldivergenz (33) ausgeführt ist, Strahlung mit niedriger Strahldivergenz entlang von einem Rand (38) der Bahn (14) zu emittieren, und eine seitliche Position des Randes (38) der Bahn (14) definiert.

14. Gasblaszellstoffpulpetrockner (1) nach einem der Ansprüche 7 - 13, wobei die Prüfvorrichtung (52) einen Strahler mit niedriger Strahldivergenz (33) in der Form eines Laserstrahlers (33) umfasst.

15. Gasblaszellstoffpulpetrockner (1) nach einem der Ansprüche 7 - 14, wobei die Prüfvorrichtung (152) eine Kameravorrichtung (130, 132) umfasst, die einen Bildsensor (135) umfasst, der ausgeführt ist, reflektierte Strahlung zu detektieren, wobei die Prüfvorrichtung (152) weiter einen Bildverarbeiter (151) umfasst, der angepasst ist, ein Bild zu analysieren, das durch den Bildsensor (135) erfasst wird, um die Position der Bahn (14) und/oder das Auftreten irgendeines Rückstandes (48) der Bahn (14) zu detektieren.

16. Gasblaszellstoffpulpetrockner (1) nach einem der Ansprüche 7 - 15, wobei die Prüfvorrichtung (52, 152) mit einer mobilen Einheit (43, 143) kommuniziert.

17. Gasblaszellstoffpulpetrockner (1) nach einem der Ansprüche 7 - 16, wobei die Prüfvorrichtung (52) eine Kameraeinheit (58) umfasst, die angepasst ist, einen Rand (38) der Bahn (14) zu filmen.

## Revendications

1. Procédé pour inspecter au moins une première section de séchage (5) d'un sécheur de pulpe de cellulose soufflant du gaz (1) sélectionné dans le groupe de sécheurs comprenant des sécheurs à films aériens et des sécheurs verticaux, le sécheur de pulpe de cellulose (1) fonctionnant pour sécher un film (14) de pulpe de cellulose en soufflant du gaz en direction du film (14) depuis des sorties de gaz (24) de caissons de soufflage (22, 26) de la première section de séchage (5), le procédé étant **caractérisé par** l'inspection de la première section de séchage (5) par
- la détection de rayonnement réfléchi par la première section de séchage (5) ; et
- l'analyse, sur la base du rayonnement réfléchi détecté, d'au moins l'une d'une position latérale d'un bord (38) du film (14) pendant le fonctionnement du sécheur (1) et de l'apparition d'un quelconque résidu (48) du film (14).

2. Procédé selon la revendication 1, comprenant en outre l'inspection de la première section de séchage (5) par
- l'émission de rayonnement à faible divergence sur la première section de séchage (5), le rayonnement à faible divergence étant un faisceau de rayonnement à faible divergence qui est émis d'une source ponctuelle sur un dispositif émetteur et ne se diffuse pas à une largeur, après une distance de 50 mètres, de plus de 30 cm ;
- la détection de la réflexion du rayonnement à faible divergence émis ; et
- l'analyse, sur la base de la réflexion détectée du rayonnement à faible divergence émis, d'au moins l'une d'une position du film (14) pendant le fonctionnement du sécheur (1) et de l'apparition d'un quelconque résidu (48) du film (14).

3. Procédé selon la revendication 2, dans lequel l'inspection de la première section de séchage (5) comprend en outre
- le balayage du faisceau de rayonnement à faible divergence sur au moins une partie de la première section de séchage (5).

4. Procédé selon l'une quelconque des revendications précédentes, dans lequel l'inspection de la première section de séchage (5) comprend en outre
- la détection du rayonnement réfléchi sur la première section de séchage (5), au moyen d'au moins deux capteurs différents (35) situés à différentes positions sur la première section de séchage (5).

5. Procédé selon l'une quelconque des revendications précédentes, dans lequel l'inspection d'une seconde section de séchage (5) du sécheur de pulpe de cellulose (1) par
- le déplacement d'au moins un capteur (35 ; 135) qui détecte le rayonnement réfléchi, d'un emplacement sur ladite première section de séchage (5) vers un emplacement sur ladite seconde section de séchage (5),
- la détection du rayonnement réfléchi sur la seconde section de séchage (5) ; et
- l'analyse, sur la base du rayonnement réfléchi détecté, d'au moins l'une d'une position du film (14) sur la seconde section de séchage (5) pendant le fonctionnement du sécheur (1) et de l'apparition d'un quelconque résidu (48) du film (14) sur la seconde section de séchage (5).

6. Procédé selon l'une quelconque des revendications précédentes, dans lequel ladite étape de détection du rayonnement réfléchi comprend la détection du rayonnement réfléchi au moyen d'un capteur d'images (135), et dans lequel ladite étape d'analyse d'une position du film (14) et/ou de l'apparition d'un quelconque résidu (48) du film (14), comprend l'analyse d'une image détectée par le capteur d'image (135) au moyen d'un dispositif de traitement d'image (151).

7. Sécheur de pulpe de cellulose soufflant du gaz (1) sélectionné dans le groupe de sécheurs comprenant des sécheurs à films aériens et des sécheurs verticaux et séchant un film (14) de pulpe de cellulose au moyen de gaz fourni par des sorties de gaz (24) de caissons de soufflage (22, 26) d'une première section de séchage (5) du sécheur de pulpe, **caractérisé en ce que** le sécheur de pulpe de cellulose (1) comprend un dispositif d'inspection (52, 152) présentant au moins un premier capteur de rayonnement (35, 135) agencé pour détecter le rayonnement réfléchi sur la première section de séchage (5) pour détecter au moins une d'une position latérale d'un bord (38) du film (14) pendant le fonctionnement du sécheur (1) et de l'apparition d'un quelconque résidu (48) du film (14).

8. Sécheur de pulpe de cellulose soufflant du gaz (1) selon la revendication 7, dans lequel le dispositif d'inspection (52) comprend au moins un premier émetteur (33) de rayonnement à faible divergence agencé pour émettre le rayonnement à faible divergence sur la première section de séchage (5), le rayonnement à faible divergence étant un faisceau de rayonnement à faible divergence qui est émis d'une source ponctuelle sur le dispositif émetteur et ne se diffuse pas à une largeur, après une distance de 50 mètres, de plus de 30 cm, au moins un premier capteur de rayonnement (35) agencé pour détecter le rayonnement à faible divergence réfléchi, et un système de contrôle (44) adapté pour analyser, sur la base du rayonnement détecté du rayonnement à faible divergence émis, au moins une d'une position du film (14) pendant le fonctionnement du sécheur et de l'apparition d'un quelconque résidu (48) du film (14).

9. Sécheur de pulpe de cellulose soufflant du gaz (1) selon la revendication 8, dans lequel le dispositif d'inspection (52) comprend un dispositif de manoeuvre (56) agencé pour déplacer ledit premier émetteur (33) de rayonnement à faible divergence vers une seconde section de séchage du sécheur de pulpe de cellulose (1).

10. Sécheur de pulpe de cellulose soufflant du gaz (1) selon l'une quelconque des revendications 8 ou 9, dans lequel le dispositif d'inspection (52, 152) comprend un dispositif de balayage (54) agencé pour balayer le premier émetteur (33) de rayonnement à faible divergence et le capteur de rayonnement (35, 135) sur au moins une partie de la première section de séchage (5).

11. Sécheur de pulpe de cellulose soufflant du gaz (1) selon l'une quelconque des revendications 7 - 10, dans lequel le sécheur (1) comprend des rouleaux rotatifs (6, 10) agencés sur des côtés de rouleau rotatif opposés (45, 46) du sécheur (1), les rouleaux rotatifs (6, 10) faisant tourner le film (14) de pulpe de cellulose lorsqu'il voyage d'une section de séchage (5) à une autre section de séchage (5), ledit premier capteur de rayonnement (35, 135) étant agencé sur un des côtés de rouleau rotatif (45, 46).

12. Sécheur de pulpe de cellulose soufflant du gaz (1) selon la revendication 11, dans lequel un deuxième capteur de rayonnement (35, 135) est agencé sur un des côtés de rouleau rotatif (45, 46).

13. Sécheur de pulpe de cellulose soufflant du gaz (1) selon l'une quelconque des revendications 8 - 12, dans lequel le premier émetteur (33) de rayonnement à faible divergence est agencé pour émettre un rayonnement à faible divergence le long d'un bord (38) du film (14), et définir une position latérale du bord (38) du film (14).

14. Sécheur de pulpe de cellulose soufflant du gaz (1) selon l'une quelconque des revendications 7 - 13, dans lequel le dispositif d'inspection (52) comprend un émetteur (33) de rayonnement à faible divergence sous forme d'un émetteur laser (33).

15. Sécheur de pulpe de cellulose soufflant du gaz (1) selon l'une quelconque des revendications 7 - 14, dans lequel le dispositif d'inspection (152) comprend un dispositif de caméra (130, 132) comprenant un capteur d'image (135) adapté pour détecter un rayonnement réfléchi, le dispositif d'inspection (152) comprenant en outre un traitement d'image (151) adapté pour analyser une image détectée par le capteur d'image (135) pour détecter la position du film (14) et/ou et l'apparition d'un quelconque résidu (48) du film (14).

16. Sécheur de pulpe de cellulose soufflant du gaz (1) selon l'une quelconque des revendications 7 - 15, dans lequel ledit dispositif d'inspection (52, 152) communique avec une unité mobile (43, 143).

17. Sécheur de pulpe de cellulose soufflant du gaz (1) selon l'une quelconque des revendications 7 - 16, dans lequel ledit dispositif d'inspection (52) comprend une unité de caméra (58) adaptée pour filmer un bord (38) du film (14).
